# FASCICULE DE BREVET EUROPEEN

(11) **EP 1 662 110 B1**
(45) Date de publication et mention de la délivrance du brevet: **23.01.2008**
(21) Numéro de dépôt: 05292339.8
(22) Date de dépôt: 04.11.2005
(51) Int. Cl.: F01P 3/10, G01M 15/00

(54) **Moteur optique à combustion interne pour essais avec refroidissement du piston**
Optische Brennkraftmaschine für Prüfungen mit Kolbenkühlung
Optical internal combustion engine for tests with piston cooling

(30) Priorité: 30.11.2004 FR 0412723
(43) Date de publication de la demande: 31.05.2006
(73) Titulaire: Institut Français du Pétrole, 92852 Rueil Malmaison Cédex (FR)
(72) Inventeur: Ambrazas, Didier, 92160 Antony (FR); Clair, Romain, 92500 Rueil-Malmaison (FR); Thirouard, Benoit, 92500 Rueil-Malmaison (FR)

(56) Documents cités:
- FR-A- 2 812 392
- US-A- 3 070 079
- US-A1- 2002 139 322
- US-A1- 2003 066 499

## Description

La présente invention se rapporte à un moteur à combustion interne et plus particulièrement au refroidissement du piston que comporte ce moteur.

Elle vise plus particulièrement un moteur pour essais, notamment un moteur optique.

Ce type de moteur, tel que celui décrit par exemple dans la demande de brevet français N° 2 812 392 du demandeur, comprend un bloc moteur avec un équipage mobile conventionnel comprenant un carter, un vilebrequin, une bielle et un piston (piston inférieur) coulissant dans une première partie de cylindre (cylindrique inférieur). Le piston porte, de manière fixe, une entretoise (ou rehausse) à l'extrémité de laquelle prend appui, également de manière fixe, un autre piston, dit piston actif, qui coulisse dans une deuxième partie de cylindre ou cylindre de travail, prévue à distance de la première partie de cylindre Ce cylindre de travail permet de délimiter avec un bloc de culasse, que comporte habituellement le moteur, une chambre de combustion. Ce bloc culasse comprend une culasse qui comporte, pour l'essentiel, des moyens d'admission et des moyens d'échappement avec généralement une tubulure et une soupape ainsi qu'un dispositif d'injection (directe ou indirecte) de carburant et éventuellement un moyen d'allumage, tel qu'une bougie.
La rehausse est généralement creuse et comporte dans sa partie creuse un moyen de réflexion, tel qu'un miroir, qui renvoie, au travers d'une portion de paroi transparente de la rehausse ou d'une portion évidée de cette rehausse, une image des phénomènes internes à la chambre de combustion, tels que ceux se produisant lors de la combustion, vers un moyen d'observation, comme une caméra.
Pour ce faire, il est prévu que le piston de travail comporte une partie transparente au travers de laquelle les images des phénomènes internes à la chambre de combustion pourront être envoyées au miroir. De manière préférentielle, il est prévu que ce piston porte une pastille transparente et résistante aux hautes températures, comme du quartz.

Dans un tel moteur, le piston actif ne peut pas être refroidi, comme cela se réalise habituellement, par aspersion d'un fluide de refroidissement, tel que l'huile, en dessous du piston et plus particulièrement dans la jupe du piston. En effet, la présence d'huile sur les parois du cylindre de travail ou sur les parties observées par la caméra, comme le miroir, provoque des reflets ou des interférences qui rendent inexploitables les données enregistrées.

En l'absence d'un tel refroidissement, il est donc nécessaire de limiter la vitesse de rotation du moteur (de l'ordre de 2 000 tr/min) ainsi que sa charge maximale d'utilisation. Cette limitation a pour effet de modérer la température des pièces optiques ainsi que des pièces mécaniques et d'évacuer les calories générées, d'une part, par la combustion et, d'autre part, par le frottement des segments et des bagues-guides de piston sur la paroi intérieure du cylindre. Ceci permet ainsi d'éviter leur rupture ou le serrage du piston dans le cylindre.

La présente invention se propose de remédier aux inconvénients mentionnés ci-dessus grâce à un refroidissement en circuit fermé du piston qui évite de laisser des traces du fluide de refroidissement sur les parties à observer et qui permette l'utilisation du moteur dans toute sa plage habituelle de fonctionnement.

A cet effet, la présente invention concerne un moteur optique à combustion interne pour essais comprenant un bloc moteur avec un vilebrequin, un cylindre, un piston inférieur sur lequel s'appuie une entretoise creuse portant un piston actif muni d'une partie transparente, un moyen de réflexion logée dans ladite entretoise pour renvoyer les images ayant traversées ladite partie transparente, et un bloc culasse avec une culasse délimitant une chambre de combustion avec le piston actif, caractérisé en ce que le moteur comprend un circuit de refroidissement pour ledit piston actif avec un dispositif d'amenée de fluide de refroidissement traversant l'entretoise jusqu'au piston actif, des moyens de circulation dudit fluide autour de la paroi périphérique de la partie transparente, et un dispositif de retour de fluide partant du piston actif et traversant ladite entretoise.

Avantageusement, les moyens d'amenée peuvent comprendre deux parties télescopiques.

Les parties télescopiques peuvent comprendre un tube d'alimentation fixe coulissant dans une canalisation solidaire d'au moins le piston actif.

Un moyen d'étanchéité peut être entre le tube d'alimentation et la canalisation.

Alternativement, les moyens d'amenée peuvent comprendre un élément expansible.

Préférentiellement, cet élément expansible peut comprendre un ressort à fil creux.

L'élément expansible peut être par un support fixe comportant une alimentation en fluide de refroidissement.

Le support peut comprendre un socle évidé et au moins une patte de fixation.

Un moyen anti-retour de fluide peut être placé dans les moyens d'amenée du fluide de refroidissement.

Un moyen de limitation de pression du fluide peut être placé dans les moyens d'amenée.

Les moyens de circulation de fluide peuvent comprendre au moins un évidement prévu dans le piston actif entre la paroi périphérique de l'élément transparent et la partie du piston actif adaptée à recevoir cet élément.

Les moyens de retour de fluide peuvent comprendre une canalisation d'évacuation.

Le dispositif de retour de fluide peut comprendre deux parties télescopiques.

De manière préférentielle, le fluide de refroidissement utilisé peut être de l'huile.

Les autres caractéristiques et avantages de l'invention apparaîtront à la lecture de la description donnée ci-après à partir d'exemples non limitatifs de réalisation, en se référant aux dessins annexés où :
- la figure 1 montre schématiquement un moteur à combustion interne selon l'invention ;
- la figure 2 est une vue partielle en perspective d'une partie du moteur de la figure 1 ;
- les figures 3 et 4 sont des vues partielles en coupe de la partie du moteur de la figure 2 selon le plan P1 et la flèche F1 avec deux positions distinctes du piston ;
- la figure 5 est une vue partielle en perspective d'une variante de la partie du moteur de la figure 1 et
- les figures 6 et 7 sont des vues partielles en coupe de la partie du moteur de la figure 5 selon le plan P2 et la flèche F2 avec deux positions distinctes du piston.

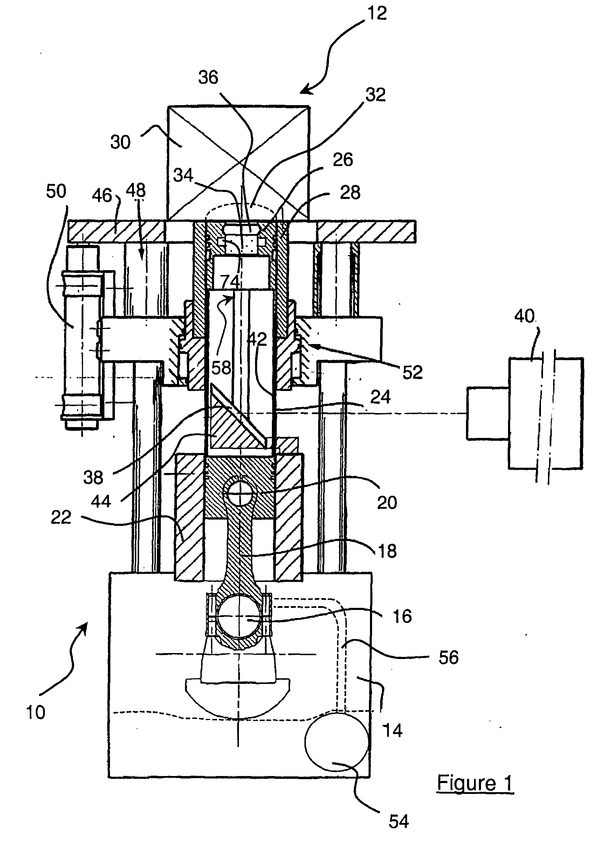

Sur la figure 1, le moteur à combustion interne, notamment un moteur pour essais, comprend un bloc moteur 10 et un bloc culasse 12.
Le bloc moteur comprend un carter fixe 14 logeant un équipage mobile avec un vilebrequin 16, une bielle 18 liée par sa tête au vilebrequin et par son pied de bielle à un piston 20, dénommé piston inférieur. Ce piston coulisse dans un cylindre inférieur 22, fixe avec le carter, dans un mouvement alternatif rectiligne sous l'impulsion conjuguée du vilebrequin et de la bielle. Le cylindre est ouvert de manière à ce qu'une entretoise cylindrique creuse ou rehausse 24 prenne appui par une de ses extrémités sur le haut du piston 20 en étant fixe par rapport à celui-ci. L'autre extrémité de cette rehausse porte, également de manière fixe, un piston 26, dit piston actif, qui coulisse dans une autre partie de cylindre fixe 28, dit cylindre de travail, disposée à distance et coaxialement au cylindre inférieur 22. De manière préférentielle, la rehausse 24 et le piston 26 sont formés d'une seule pièce, par moulage par exemple. La partie haute du cylindre de travail est fermée par le bloc culasse 12 avec une culasse 30 qui permet de former ainsi une chambre de combustion 32 délimitée par le haut du piston actif, la paroi intérieure du cylindre de travail et la partie basse de la culasse.
Bien entendu, le bloc culasse comprend également, outre la culasse 30, des moyens d'admission d'au moins un fluide, comme de l'air frais ou suralimenté, dans la chambre 32 et des moyens d'échappement de gaz brûlés, résultant de la combustion d'un mélange carburé dans cette chambre, avec généralement une tubulure et une soupape ainsi qu'un dispositif d'injection (directe ou indirecte) de carburant et éventuellement un moyen d'allumage, tel qu'une bougie.

Pour pouvoir observer le déroulement des phénomènes internes à la chambre de combustion 32, comme la combustion d'un mélange carburé dans cette chambre, le piston actif 26 comprend une paroi de fond transparente 34 au travers de laquelle les images de ces phénomènes peuvent être observées. Préférentiellement, le piston 26 comprend un bol concave 36 dont la concavité est dirigée vers la culasse et le fond du bol est sous la forme d'une pastille transparente et résistante aux hautes températures, comme du quartz. Les images des phénomènes internes à la chambre de combustion sont renvoyées par un miroir 38, généralement oblique, vers un moyen d'observation et/ou d'enregistrement, comme une caméra 40, au travers d'une portion de paroi transparente de la rehausse ou d'une portion évidée 42 de cette rehausse. Le miroir 38 est porté par une embase 44 qui traverse la rehausse au niveau de la portion évidé et qui est fixée par tous moyens connus sur le cylindre inférieur 22 de manière à ce que le miroir ne se déplace pas lors du mouvement de l'ensemble pistons et rehausse 20, 24 et 26.
A titre d'exemple, ce moteur est un moteur d'essai à culasse mobile comme mieux décrit dans la demande de brevet français N° 2 812 392 du demandeur, et qui comprend des moyens permettant de déplacer le bloc culasse 12, comme le support de culasse 46, les colonnes 48, le vérin de déplacement 50, le vérin pneumatique 52, ...
Ce moteur comprend en outre un circuit de d'huile de lubrification qui comporte notamment une pompe à huile 54 généralement entraînée en rotation par le vilebrequin et qui capte l'huile présente dans le fond du carter 14 pour la distribuer par des conduits de distribution 56 vers les différentes pièces à lubrifier comme la liaison tête de bielle-maneton du vilebrequin et pour refroidir le piston inférieur 20 en projettant de l'huile dans le dessous de ce piston.

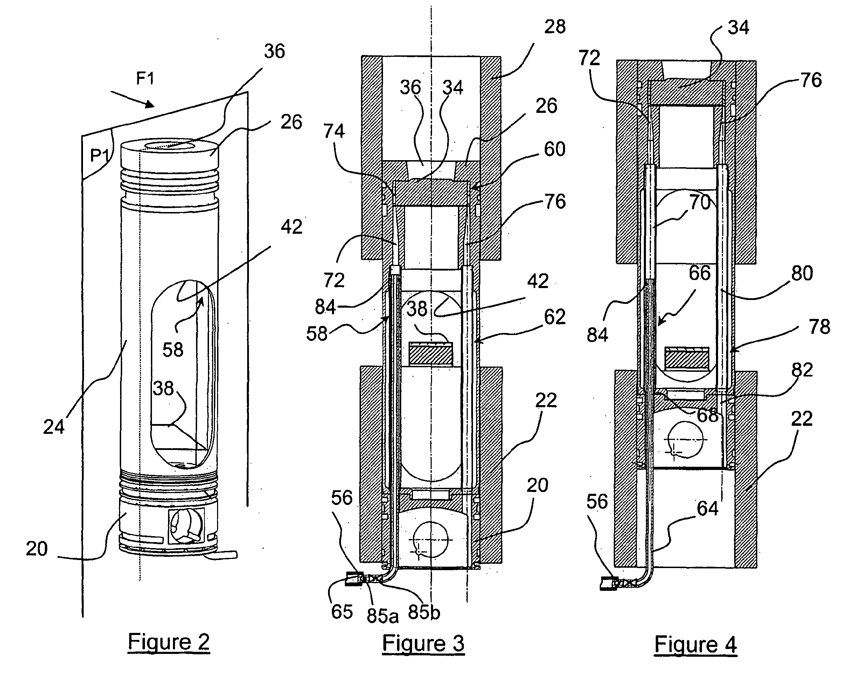

En se rapportant également aux figures 2, 3 et 4, le moteur comprend en plus un circuit de refroidissement du piston actif 26 qui, dans le cas décrit, utilise l'huile et la plupart des composants du circuit de lubrification habituellement présent dans un moteur. Ce circuit de refroidissement pourrait employer un autre fluide de refroidissement, comme de l'eau glycolée qui est utilisée dans le circuit de refroidissement du moteur et qui comprend habituellement une pompe à eau, un radiateur de refroidissement, ...
Ainsi, pour assurer le refroidissement du piston actif 26, le circuit comprend la pompe à huile 54, des moyens d'amenée 58 d'huile de refroidissement vers le piston, des moyens de circulation 60 de cette huile dans le piston et des moyens de retour 62 d'huile dans le carter 14 de façon à obtenir un circuit de refroidissement en boucle fermée.
Plus précisément, les moyens d'amenée 58 sont sous une forme télescopique et comprennent un tube d'alimentation 64 vertical fixe avec le bloc carter 10, et plus particulièrement avec le cylindre inférieur 22, dont l'embouchure 65 est contenue dans ce bloc carter en étant relié par un conduit de distribution 56 à la pompe 54. Ce tube est logé à glissement dans une canalisation d'alimentation 66 verticale formée par un alésage d'alimentation 68 vertical dans le piston inférieur 20 réalisé à distance de la paroi périphérique extérieure de ce piston en traversant toute son épaisseur et communiquant avec une conduite d'alimentation verticale 70 formée le long et à l'intérieur de la partie creuse de la rehausse 24 en étant prévue en dehors du champ d'action du miroir 38 et par conséquent en dehors de la portion évidée 42 de cette rehausse. Les longueurs du tube 64 et de la canalisation d'alimentation 66 sont telles que, pour toutes les positions de l'ensemble pistons et rehausse 20, 24, 26 entre la position extrême basse ou point mort bas (figure 3) et la position extrême haute (figure 4) ou point mort haut, le débouché du tube 64 soit toujours compris dans la canalisation 66.
La conduite 70 aboutit aux moyens de circulation 60 de l'huile au sein du piston actif 26. Ces moyens de circulation comprennent une entrée 72 qui est sous la forme d'un alésage sensiblement vertical prévu dans le piston actif et qui est en communication avec au moins un évidement circulaire 74 dans lequel circule cette huile de refroidissement. Préférentiellement, cet évidement est prévu entre la paroi périphérique de la pastille transparente 34 et la partie du piston adaptée à recevoir cette pastille. Avantageusement, cet évidement est sous la forme d'une rainure circulaire, de préférence hélicoïdale, ou d'une multiplicité de rainures circulaires parallèles les unes aux autres et communiquant les unes avec les autres. Cet évidement est ensuite raccordé à une sortie 76, également sous la forme d'un alésage sensiblement vertical prévu dans le piston actif, qui est elle-même connectée aux moyens de retour 62 de l'huile chaude vers le carter 14. Ces moyens de retour comprennent une canalisation d'évacuation 78 d'huile de refroidissement disposée symétriquement à la canalisation d'alimentation 66 et qui comporte les mêmes éléments que celle-ci. Ainsi, la canalisation d'évacuation comprend une conduite d'évacuation 80 semblable à la conduite d'alimentation 70 et un alésage d'évacuation 82 également semblable à l'alésage d'alimentation 68.

Bien entendu et cela sans sortir du cadre de l'invention, les conduites 70 et 80 peuvent être d'une seule pièce avec l'ensemble rehausse et piston actif.
De même et cela sans sortir du cadre de l'invention, il peut être prévu que les moyens de retour 62 soient sous une forme télescopique semblable aux moyens d'amenée 58. Dans ce cas, un tube d'évacuation fixe sera logé à glissement à l'intérieur de la conduite d'évacuation 80 et comportera une embouchure semblable à l'embouchure 65 du tube d'alimentation 64. Grâce à cela il peut être prévu de réaliser un circuit de refroidissement du piston actif distinct du circuit de lubrification et de séparer ainsi l'huile de refroidissement de l'huile de lubrification.
En fonctionnement, l'huile présente dans le carter 14 est aspirée par la pompe puis est refoulée dans le tube d'alimentation 64, avec une pression à titre d'exemple de l'ordre de 3 bars, par la conduite 56. Cette huile sortant du tube 64 circule ensuite dans la conduite d'alimentation 70 puis est introduite par l'entrée 72 dans l'évidement 74. Cette huile circule dans cet évidement en captant les calories présentes dans le piston actif et générées notamment par la combustion dans la chambre de combustion et dans le bol. Cette huile, qui est maintenant chaude, ressort par la sortie 76 pour être évacuée, sous l'effet de la pression d'alimentation de la pompe 54, au travers de la conduite d'évacuation 80 et de l'alésage d'évacuation 82 vers le carter où elle est refroidie de manière conventionnelle par un échangeur d'huile.

Avantageusement, il peut être prévu de disposer un joint d'étanchéité 84 entre la périphérie externe du tube 64 et la paroi interne de la canalisation 66 de manière à créer un système de pompage. Ce système de pompage permet de pousser l'huile contenue dans la conduite 70 par le tube 64 vers les moyens de circulation d'huile 60, de faire circuler l'huile dans l'évidement 74 du piston actif 26 et d'aider le retour de l'huile dans le carter par circulation dans la canalisation 78 et cela lorsque l'ensemble pistons et rehausse 20, 24, 26 a un mouvement allant du haut vers le bas en considérant les figures. Ce joint d'étanchéité peut être sous la forme d'une bague en feutre permettant d'absorber les vibrations du tube et de la canalisation et est prévu de façon à ce que l'étanchéité entre le tube et la canalisation ne soit pas parfaite pour assurer un éventuel retour d'huile vers le carter en cas de surpression.
Dans le cas où un moyen d'étanchéité est prévu entre le tube et la canalisation, la conduite 70 ou le tube 64 et plus particulièrement son embouchure 65 portera un clapet anti-retour 85a pour éviter un retour intempestif de l'huile de refroidissement dans la conduite 56 et dans la pompe sous l'effet du pompage. Avantageusement, il peut être également prévu de disposer une vanne de surpression 85b en aval du clapet anti-retour, en considérant le sens de circulation de l'huile, pour éviter les surpressions générées par le mouvement du piston et conséquemment par le système de pompage.

Grâce à ce circuit, le fluide de refroidissement du piston actif est dans un circuit fermé et aucune projection de ce fluide sur une quelconque partie du moteur ne peut venir perturber la transmission et l'enregistrement des images des phénomènes internes à la chambre de combustion.

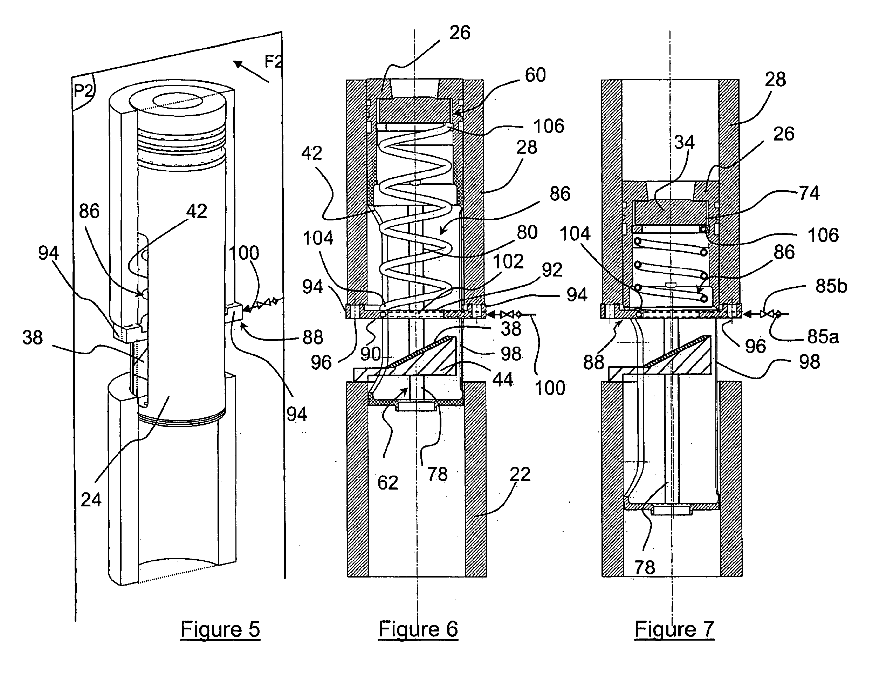

Dans l'exemple des figures 5 à 7, qui est une variante des figures 1 à 4, seuls les moyens d'amenée de fluide sont modifiés et pour cette raison les éléments communs aux deux exemples de réalisation comportent les mêmes références.

Les moyens d'amenée de fluide de refroidissement comportent un élément expansible 86 qui, dans l'exemple montré, est sous la forme d'un ressort à fil creux et à spires non jointives et qui est prévu entre un support 88 fixé soit sur un élément du bloc carter comme le cylindre inférieur 22 soit sur l'embase 44 portant le miroir 38 soit sur le cylindre de travail 28, de préférence en partie basse de ce cylindre de travail.
Par élément expansible, il est entendu tout élément pouvant absorber la variation de dimension entre le support fixe et le piston lorsque ce dernier a un mouvement allant de ses positions de point mort haut vers le point mort bas et réciproquement.

Comme illustré sur les figures 5 à 7, le support 88 comprend un socle 90 circulaire avec une partie centrale évidée 92 disposée coaxialement avec le piston actif et deux pattes de fixation 94 radialement opposées comportant des passages de vis 96 permettant la mise en place et la fixation de ce support sur le cylindre de travail. L'une de ces pattes traverse la rehausse 24 au niveau de l'évidement 42 alors que l'autre de ces pattes la traverse au niveau d'une lumière 98 disposée symétriquement à l'évidement 42 tout en étant d'étendue axiale identique. La partie centrale évidée 92 a une dimension diamétrale telle qu'elle ne puisse pas gêner le passage des images des phénomènes internes à la chambre de combustion vers le miroir 38. C'est donc sur la partie pleine de ce socle que s'appuie la spire terminale inférieure du ressort creux et le diamètre interne de ce ressort a également un diamètre tel qu'il ne puisse pas interférer avec la transmission des images de ces phénomènes.
Le support 88 comprend une arrivée extérieure d'huile 100 qui est alimentée, comme dans le cas des figures 2 à 4 par la pompe à huile et des conduites de distribution. Cette arrivée est en relation fluidique avec un canal 102, de préférence circulaire, prévu dans la partie pleine du socle 90 et est en communication avec l'extrémité libre 104 de la spire terminale inférieure du ressort à fil creux. L'extrémité libre 106 de la spire terminale supérieure de ce ressort est en communication avec une entrée de fluide des moyens de circulation 60 prévus au niveau du piston actif. Cette entrée peut être identique à l'entrée 72, telle qu'illustrée aux figures 2 à 4, et, dans le cas des figures 5 à 7, comporte un alésage incliné axialement (non référencé) qui permet de raccorder, de manière fixe et étanche, l'extrémité libre 106 du ressort.

Comme déjà décrit en relation avec les figures 2 à 4, les moyens de circulation 60 de l'huile à l'intérieur du piston actif 26 comprennent au moins un évidement circulaire 74 dans lequel circule cette huile de refroidissement. Cet évidement est prévu entre la paroi périphérique de la pastille transparente 34 et la partie du piston adaptée à recevoir cette pastille.
Egalement, cet évidement 74 est raccordé à une sortie d'huile (non représentée), identique à la sortie 76 des figures 2 à 4. Cette sortie est préférentiellement connectée à des moyens de retour identique aux moyens de retour 62 des figures 2 à 4 avec une canalisation d'évacuation 78 disposée le long de la rehausse 24 et qui comprend une conduite d'évacuation 80 et un alésage d'évacuation (non représenté) dans le piston inférieur.

En fonctionnement, l'ensemble pistons et rehausse a un mouvement vertical alternatif durant lequel le ressort se déploie (figure 6) sous l'action de l'effort de traction exercé par le piston actif 26 jusqu'au point mort haut de ce piston ou se contracte (figure 7), toujours sous l'action du piston 26, entre le support 88 et ce piston et cela sous l'impulsion du mouvement inverse du piston allant du point mort haut de piston vers son point mort bas.
Pendant ce fonctionnement, l'huile présente dans le carter est aspirée par la pompe puis admise à l'arrivée d'huile 100, circule ensuite dans le canal 102 puis est introduite dans l'extrémité 104 du ressort 86. Cette huile circule tout au long de l'intérieur des spires du ressort 86 et débouche dans l'évidement 74 et cela quel que soit l'état du ressort, déployé selon la figure 6 ou contracté selon la figure 7. Cette huile capte, par circulation dans cet évidement, les calories présentes dans le piston et dues notamment à la combustion. Cette huile chaude ressort ensuite de l'évidement et est évacuée, sous l'effet de la pression d'alimentation de la pompe, vers le carter par la canalisation d'évacuation 78.
Bien entendu et comme déjà mentionné en relation avec les figures précédentes, l'arrivée d'huile 100 portera un clapet anti-retour 85a et une vanne de surpression 85b disposée en aval du clapet.

De même, grâce à ce circuit fermé pour le refroidissement du piston, aucune projection de fluide ne peut venir perturber la transmission des images des phénomènes internes à la chambre de combustion vers le miroir.

Bien entendu et cela sans sortir de l'invention, il peut être prévu que les moyens de retour de fluide de refroidissement soient également sous la forme d'un ressort à fil creux coaxial au ressort 86 avec une dimension radiale telle qu'elle ne puisse pas gêner le passage des images des phénomènes internes à la chambre de combustion vers le miroir 38. A titre d'exemple, les deux ressorts ont des dimensions identiques et les spires de ces deux ressorts sont imbriquées les unes dans les autres. Dans cette configuration, l'extrémité libre de la spire terminale supérieure du ressort de retour d'huile de refroidissement est connectée à la sortie des moyens de circulation de fluide et l'extrémité libre de la spire terminale inférieure de ce ressort est connectée, sur le support 88, à un canal d'évacuation et une sortie de fluide semblable à l'entrée d'huile 100 et au canal 102.

Il peut être aussi prévu de disposer de façon identique au ressort de retour un autre ressort à fil creux dans lequel ne circule pas un fluide de refroidissement mais qui reçoit au moins un conducteur électrique et/ou optique. Ceci permet de placer un ou plusieurs capteurs dans le piston actif, et plus particulièrement dans le bol, de relier ces capteurs à des appareils de mesure placés à l'extérieur du moteur. Pour ce faire, il peut être prévu que soit placé un connecteur (électrique ou optique) sur l'une au moins des pattes de fixation 94 et de relier ce connecteur aux capteurs par un ou plusieurs conducteurs glissés dans la partie creuse du fil de ressort, dans un canal semblable au canal 102 et à une sortie de conducteurs semblable à l'arrivée d'huile 100.

La présente invention n'est pas limitée aux exemples de réalisation décrit ci-dessus mais englobe toutes variantes et tous équivalents tels qu'ils sont définis par les revendications présentes.

## Revendications

1. Moteur optique à combustion interne pour essais comprenant un bloc moteur (10) avec un vilebrequin (16), un cylindre (22, 28), un piston inférieur (20) sur lequel s'appuie une entretoise creuse (24) portant un piston actif (26) muni d'une partie transparente (34), un moyen de réflexion (38) logée dans ladite entretoise pour renvoyer les images ayant traversées ladite partie transparente, et un bloc culasse (12) avec une culasse (30) délimitant une chambre de combustion (32) avec le piston actif (26), **caractérisé en ce que** le moteur comprend un circuit de refroidissement pour ledit piston actif avec un dispositif d'amenée de fluide de refroidissement (64, 66; 86) traversant l'entretoise (24) jusqu'au piston actif (26), des moyens de circulation (60) dudit fluide autour de la paroi périphérique de la partie transparente (34), et un dispositif de retour de fluide (78) partant du piston actif (26) et traversant ladite entretoise.

2. Moteur à combustion interne selon la revendication 1, **caractérisé en ce que** les moyens d'amenée comprennent deux parties télescopiques (64, 66).

3. Moteur à combustion interne selon la revendication 2, **caractérisé en ce que** les parties télescopiques comprennent un tube d'alimentation fixe (64) coulissant dans une canalisation (66) solidaire d'au moins le piston actif (26).

4. Moteur à combustion interne selon la revendication 2 ou 3, **caractérisé en ce qu'**un moyen d'étanchéité est placé entre le tube d'alimentation (64) et la canalisation (66).

5. Moteur à combustion interne selon la revendication 1, **caractérisé en ce que** les moyens d'amenée comprennent un élément expansible (86).

6. Moteur à combustion interne selon la revendication 5, **caractérisé en ce que** l'élément expansible comprend un ressort à fil creux (86).

7. Moteur à combustion interne selon la revendication 5, **caractérisé en ce que** l'élément expansible est porté par un support fixe (88) comportant une alimentation (100,102) en fluide de refroidissement.

8. Moteur à combustion interne selon la revendication 7, **caractérisé en ce que** le support comprend un socle évidé (90, 92) et au moins une patte de fixation (94).

9. Moteur à combustion interne selon l'une des revendications précédentes, **caractérisé en ce qu'**un moyen anti-retour de fluide (85a) est placé dans les moyens d'amenée (58) du fluide de refroidissement.

10. Moteur à combustion interne selon l'une des revendications précédentes, **caractérisé en ce qu'**un moyen de limitation de pression du fluide (85b) est placé dans les moyens d'amenée (58).

11. Moteur à combustion interne selon la revendication 1, **caractérisé en ce que** les moyens de circulation de fluide comprennent au moins un évidement (74) prévu dans le piston actif entre la paroi périphérique de la partie transparente (34) et la partie du piston actif adaptée à recevoir cette partie transparente.

12. Moteur à combustion interne selon la revendication 1, **caractérisé en ce que** le dispositif de retour de fluide (62) comprend une canalisation d'évacuation (78).

13. Moteur à combustion interne selon la revendication 1, **caractérisé en ce que** le dispositif de retour de fluide (62) comprend deux parties télescopiques.

14. Moteur à combustion interne selon l'une des revendications précédentes, **caractérisé en ce que** le fluide de refroidissement est de l'huile.

## Claims

1. An optical internal combustion test engine including an engine block (10) with a crankshaft (16), a cylinder (22, 28), a lower piston (20) onto which there is applied a hollow spacer (24) bearing an active piston (26) provided with a transparent part (34), a reflecting means (38) housed in said spacer for sending the images having traversed said transparent part, and a cylinder head block (12) with a cylinder head (30) delimiting a combustion chamber (32) with the active piston (26), **characterised in that** the engine includes a cooling circuit for said active piston with a device for supplying liquid coolant (64, 66; 86) traversing the spacer (24) up to the active piston (26), means (60) for circulating said fluid around the peripheral wall of the transparent part (34), and a return device (78) for fluid exiting from the active piston (26) and traversing said spacer.

2. The internal combustion engine according to Claim 1, **characterised in that** the supply means include two telescopic parts (64, 66).

3. The internal combustion engine according to Claim 2, **characterised in that** the telescopic parts include a fixed feed tube (64) sliding in a channel (66) which is integral with at least the active piston (26).

4. The internal combustion engine according to Claim 2 or 3, **characterised in that** a sealing means is placed between the feed tube (64) and the channel (66).

5. The internal combustion engine according to Claim 1, **characterised in that** the supply means include an expandable element (86).

6. The internal combustion engine according to Claim 5, **characterised in that** the expandable element includes a hollow-wire spring (86).

7. The internal combustion engine according to Claim 5, **characterised in that** the expandable element is borne by a fixed support (88) comprising a liquid coolant feed (100, 102).

8. The internal combustion engine according to Claim 7, **characterised in that** the support includes a recessed base (90, 92) and at least one fixing lug (94).

9. The internal combustion engine according to one of the preceding claims, **characterised in that** a fluid non-return means (85a) is placed in the liquid coolant supply means (58).

10. The internal combustion engine according to one of the preceding claims, **characterised in that** a means (85b) for limiting the pressure of the fluid is placed in the supply means (58).

11. The internal combustion engine according to Claim 1, **characterised in that** the fluid circulation means include at least one recess (74) provided in the active piston between the peripheral wall of the transparent part (34) and the part of the active piston adapted for receiving this transparent part.

12. The internal combustion engine according to Claim 1, **characterised in that** the fluid return device (62) includes an evacuation channel (78).

13. The internal combustion engine according to Claim 1, **characterised in that** the fluid return device (62) includes two telescopic parts.

14. The internal combustion engine according to one of the preceding claims, **characterised in that** the liquid coolant is oil.

## Patentansprüche

1. Optischer Verbrennungsmotor für Versuche, umfassend einen Motorblock (10) mit einer Kurbelwelle (16), einem Zylinder (22, 28), einem unteren Kolben (20), auf den sich eine hohle Abstandshülse (24) stützt, die einen aktiven Kolben (26) trägt, welcher mit einem transparenten Teil (34) ausgestattet ist, ein in der Abstandshülse angeordnetes Reflexionsmittel (38) zum Zurücksenden der Bilder, die den transparenten Teil durchquert haben, und einen Zylinderblock (12) mit einem Zylinder (30), der eine Brennkammer (32) mit dem aktiven Kolben (26) begrenzt, **dadurch gekennzeichnet, dass** der Motor eine Kühlschaltung für den aktiven Kolben umfasst mit einer Vorrichtung zum Zuführen von Kühlflüssigkeit (64, 66; 86), die die Abstandshülse (24) bis zum aktiven Kolben (26) durchquert, Mitteln (60) zum Zirkulieren des Fluids um die Umfangswand des transparenten Teils (34) und einer Vorrichtung zum Rückführen des Fluids (78), die von dem aktiven Kolben (26) ausgehen und die Abstandshülse durchqueren.

2. Verbrennungsmotor nach Anspruch 1, **dadurch gekennzeichnet, dass** die Zuführungsmittel zwei Teleskopteile (64, 66) umfassen.

3. Verbrennungsmotor nach Anspruch 2, **dadurch gekennzeichnet, dass** die Teleskopteile ein festes Zuführungsrohr (64) umfassen, welches in einem Kanal (66) gleitet, der mindestens mit dem aktiven Kolben (26) verbunden ist.

4. Verbrennungsmotor nach Anspruch 2 oder 3, **dadurch gekennzeichnet, dass** ein Dichtungsmittel zwischen dem Zuführungsrohr (64) und dem Kanal (66) platziert ist.

5. Verbrennungsmotor nach Anspruch 1, **dadurch gekennzeichnet, dass** die Zuführungsmittel ein dehnbares Element (86) umfassen.

6. Verbrennungsmotor nach Anspruch 5, **dadurch gekennzeichnet, dass** das dehnbare Element eine Feder aus hohlem Draht (86) umfasst.

7. Verbrennungsmotor nach Anspruch 5, **dadurch gekennzeichnet, dass** das dehnbare Element von einem festen Stützelement (88), welches eine Kühlfluidzuführung (100, 102) umfasst, getragen wird.

8. Verbrennungsmotor nach Anspruch 7, **dadurch gekennzeichnet, dass** das Stützelement einen ausgehöhlten Sockel (90, 92) und mindestens eine Befestigungsplatte (94) umfasst.

9. Verbrennungsmotor nach einem der vorhergehenden Ansprüche, **dadurch gekennzeichnet, dass** nur ein Fluidantirückstrommittel (85a) in dem Fluidzuführungsmittel (58) platziert ist.

10. Verbrennungsmotor nach einem der vorhergehenden Ansprüche, **dadurch gekennzeichnet, dass** ein Mittel zur Begrenzung des Fluiddrucks (85b) in dem Zuführungsmittel (58) platziert ist.

11. Verbrennungsmotor nach Anspruch 1, **dadurch gekennzeichnet, dass** die Fluidzirkulationsmittel mindestens eine in dem aktiven Kolben zwischen der Umfangswand des transparenten Teils (34) und dem Teil des aktiven Kolbens, der zur Aufnahme dieses transparenten Teils angepasst ist, angeordnete Aushöhlung (74) umfassen.

12. Verbrennungsmotor nach Anspruch 1, **dadurch gekennzeichnet, dass** die Fluidrückstromvorrichtung (62) einen Entleerungskanal (78) umfasst.

13. Verbrennungsmotor nach Anspruch 1, **dadurch gekennzeichnet, dass** die Fluidrückstromvorrichtung (62) zwei Teleskopteile umfasst.

14. Verbrennungsmotor nach einem der vorhergehenden Ansprüche, **dadurch gekennzeichnet, dass** es sich bei dem Kühlfluid um Öl handelt.
